# EUROPEAN PATENT SPECIFICATION

(11) **EP 4 410 114 B1**
(45) Date of publication and mention of the grant of the patent: **04.06.2025**
(21) Application number: 24155646.3
(22) Date of filing: 02.02.2024
(51) Int. Cl.: A23L 17/60, A23P 20/20

(54) **SHEET-SHAPED FOOD PRODUCT AND FLAKE-SHAPED FOOD PRODUCT**
BLATTFÖRMIGES NAHRUNGSMITTEL UND FLOCKENFÖRMIGES NAHRUNGSMITTEL
PRODUIT ALIMENTAIRE EN FORME DE FEUILLE ET PRODUIT ALIMENTAIRE EN FORME DE FLOCON

(30) Priority: 06.02.2023 JP 2023015968
(43) Date of publication of application: 07.08.2024
(73) Proprietor: Tanaka Foods Co., Ltd, Hiroshima City, 733-0032 (JP)
(72) Inventor: TANAKA, Shigeki, Hiroshima City, 733-0032 (JP); FUJINAKA, Yoshiharu, Hiroshima City, 733-0032 (JP); NISHIMOTO, Fumio, Hiroshima City, 733-0032 (JP)
(74) Representative: HGF

(56) References cited:
- CN-A- 102 461 930
- CN-A- 115 474 672
- JP-A- 2019 118 298

## Description

### BACKGROUND OF THE INVENTION

### Field of the Invention

The present invention relates to sheet-shaped food products and flake-shaped food products as defined in the claims.

### Related Art

There have conventionally been sold, as side dishes and Furikake (sprinkle seasoning), sheet-shaped and flake-shaped food products including seaweeds such as toasted wakame. The toasted wakame is produced by drying wakame, as mentioned in Patent Document 1 or the like. When the toasted wakame is produced by drying natural wakame as it is, an eater can enjoy not only flavor of the wakame, but also touch feel on tongue and feel upon chewing of the tissue of the wakame.

Patent Document 2 discloses a wakame processed food product in which powdered wakame is solidified in a shape such as tablet, bar, plate or sphere. In the method mentioned in Patent Document 2, wakame is first desalted by washing with water until the salinity becomes 5% or less. The wakame dried after desalting is then uniformly crushed while passing through a mesh of 50 to 800 mesh until the diameter becomes 20 µm to 140 µm.

However, sheet-shaped and flake-shaped food products formed by drying a natural seaweed as it is, such as the toasted wakame mentioned in Patent Document 1, may include very hard dried seaweed pieces or dried seaweed pieces having too large thickness dimension due to variations in a seaweed growing environment. In this case, for example, there is a fear that people with weak chewing ability or people with dentures or teeth that are not fully aligned, such as infants and the elderly, cannot enjoy eating sheet-shaped or flake-shaped food products. Meanwhile, when crushed wakame is solidified, as in the case of the wakame processed food product mentioned in Patent Document 2, there is no fear of inclusion of very hard dried wakame pieces, but there is a problem that it is difficult to perceive specific properties and flavor of wakame.
Patent Document 1: Japanese Unexamined Patent Application, Publication No. H3-112466
Patent Document 2: Japanese Unexamined Patent Application, Publication No. H6-153872

JP 2019118298 A describes a sheet-like food product formed by containing a raw material food and a binder, which is located between surface layers on both sides and between the surface layers, and has a density lower than that of each of the surface layers, wherein the mass ratio (WA/WB) of the dry mass (WA) of the raw food material to the dry mass (WB) of the binder is 4.9 to 7.3.

### SUMMARY OF THE INVENTION

It is an object of the present invention to provide sheet-shaped and flake-shaped food products which can retain original properties and flavor of a seaweed as a raw food material, and have large apparent volume (thickness dimension), and which can be easily crumbled with a weak force when chewed with teeth by an eater, and give crispy mouth feel to the eater.
[1] A sheet-shaped food product which comprises a raw food material and a binding agent, wherein
   the raw food material is a seaweed formed into a plurality of flakes by cutting,
   the sheet-shaped food product has a laminate structure in which two sheets each including the raw food material and the binding agent are overlapped with each other and integrally formed,
   both the two sheets have irregularities on an overlapping surface,
   in the sheet-shaped food product, voids are formed between the overlapping surfaces of the two sheets correspondingly to each irregular shape,
   a mass ratio (WA/WT) of a dry mass (WA) of the raw food material to a total dry mass (WT) of the sheet-shaped food product is 85% or more,
   a mass ratio (WA/WB) of the dry mass (WA) of the raw food material to a dry mass (WB) of the binding agent is 7.4 or more and 13.5 or less, and
   a moisture content of the sheet-shaped food product is 6.0% by mass or less,
   wherein the moisture content of the sheet-shaped food product is measured by a measurement method according to the atmospheric heating drying method mentioned in Analytical Manual of The Standard Tables of Food Composition in Japan - 2015- (7th Revision), and the moisture content of the sheet-shaped food produce is measured using 5 g of a sample of the sheet-shaped food product.
[2] The sheet-shaped food product according to [1], wherein the mass ratio (WA/WB) of the dry mass (WA) of the raw food material to the dry mass (WB) of the binding agent is 9.0 or more and 11.0 or less.
[3] The sheet-shaped food product according to [1], wherein a maximum length dimension of the flake of the raw food material is 1.0 mm or more.
[4] The sheet-shaped food product according to [1], wherein a thickness dimension of the flake of the raw food material is 200 µm or less.
[5] A flake-shaped food product which is formed by cutting the sheet-shaped food product according to any one of [1] to [4] into a plurality of flakes.
[6] The flake-shaped food product according to [5], wherein the flake-shaped food product is formed by adding water to the plurality of cut flakes, followed by drying shrinkage and thereby has a shape having an apparent thickness dimension larger compared to the sheet-shaped food product.

According to the present invention, it is possible to provide sheet-shaped and flake-shaped food products which can retain original properties and flavor of the seaweed as a raw food material, and have a large apparent volume (thickness dimension), and which can be easily crumbled with a weak force when chewed with teeth by an eater, and give crispy mouth feel to the eater.

### BRIEF DESCRIPTION OF THE DRAWINGS

FIG. 1 is a cross-sectional view schematically illustrating a laminate structure of a sheet-shaped food product of the present invention.
FIG. 2 is an example of a partial cross-sectional photograph of a sheet-shaped food product of wakame of the present invention.
FIG. 3 is an example of a partial cross-sectional photograph of a flake-shaped food product of wakame of the present invention.
FIG. 4 is a flowchart illustrating one example of a method for producing sheet-shaped and flake-shaped food products of the present invention.

### DETAILED DESCRIPTION OF THE INVENTION

The present invention is defined by the claims. Any subject matter falling outside the scope of the claims is provided for information purposes only. Hereinafter, sheet-shaped and flake-shaped food products will be described using drawings as necessary.

### [Sheet-Shaped Food Product]

The sheet-shaped food product includes a raw food material and a binding agent. The raw food material is a seaweed formed into a plurality of flakes by cutting. The sheet-shaped food product has a laminate structure in which two sheets each including the raw food material and the binding agent are overlapped with each other and integrally formed. Both the two sheets have irregularities on an overlapping surface. In the sheet-shaped food product, voids are formed between the overlapping surfaces of the two sheets correspondingly to each irregular shape. A mass ratio (WA/WT) of a dry mass (WA) of the raw food material to a total dry mass (WT) of the sheet-shaped food product is 85% or more. A mass ratio (WA/WB) of the dry mass (WA) of the raw food material to a dry mass (WB) of the binding agent is 7.4 or more and 13.5 or less. A moisture content of the sheet-shaped food product is 6.0% by mass or less.

### <Composition of Sheet-Shaped Food Product>

The sheet-shaped food product includes a raw food material and a binding agent.

### (Raw Food Material)

The sheet-shaped food product includes, as the raw food material, a raw food material which is a seaweed formed into a plurality of flakes by cutting (hereinafter also referred to as "seaweed flakes"). The raw food material to be generally used is obtained by adding a seasoning to a seaweed as necessary, followed by processing. The seasoning and the processing method are selected according to the degree of the material texture of a seaweed (original properties and flavor of the seaweed) and the degree of seasoning of the desired sheet-shaped food product.

There is no particular limitation on the type of seaweed included in the raw food material of the sheet-shaped food product. Examples of the seaweed include wakame, hijiki, kelp, root of wakame, red Meristotheca papulosa, green Meristotheca papulosa, funori, Porphyra tenera, and sea lettuce. Of these, wakame and kelp are preferable in terms of easily obtaining the desired effect, and wakame is more preferable.

By using seaweed flakes instead of a fine powdered food material as the raw food material, sufficient material texture of the seaweed (original properties and flavor of the seaweed) can be obtained when eating.

The shape of the raw food material exerts an influence on the structure of the sheet-shaped food product. When a fine powdered food material is used as the raw food material, the overlapping surface of sheets of the sheet-shaped food has small irregularities. As a result, because of small voids formed between the overlapping surfaces of the sheets correspondingly to each irregular shape, large voids are difficult to form. Meanwhile, when the seaweed flakes are used as the raw food material, the overlapping surface of the sheet-shaped food product has large irregularities. As a result, large voids are formed between the overlapping surfaces of the sheets correspondingly to each irregular shape. Because of large voids formed between the overlapping surfaces of the sheets in the sheet-shaped food product, the sheet-shaped food product has large apparent volume (thickness dimension), and the sheet-shaped food product has favorable crispness. The crispiness is crispy mouth feel which is given to an eater due to the fact that a sheet-shaped food product is easily crumbled with a weak force when the eater chewed the sheet-shaped food product with teeth. Flakes obtained by rolling or slicing a seaweed to a predetermined thickness in the thickness direction are usually used as seaweed flakes.

The size of the seaweed flakes is not particularly limited. The maximum length in the seaweed flakes is preferably 1.0 mm or more. This allows for larger irregularities of the overlapping surfaces of the sheets and larger voids between the overlapping surfaces of the sheets. From the viewpoint of further making the irregularities larger and further making the voids larger, the lower limit of the maximum length is more preferably 1.5 mm or more. By making the voids larger, the apparent volume can be made larger and the crispiness can be further improved. The upper limit of the maximum length is preferably 5.0 mm or less from the viewpoint of ease of forming into a sheet. The maximum length is preferably 1.0 mm or more and 5.0 mm or less, and more preferably 1.5 mm or more and 5.0 mm or less. The maximum length of the seaweed flakes included in the sheet food product is an average value of the maximum lengths of 20 seaweed flakes randomly selected from the raw food material before sheet forming (after the pre-treatment process). Specifically, the maximum length of individual seaweed flakes can be measured using a micro gauge or the like.

As mentioned above, seaweed flakes obtained by rolling or slicing a seaweed to a predetermined thickness in the thickness direction are usually used as seaweed flakes. The thickness of the seaweed flakes is preferably 200 µm or less. This makes each seaweed flake included in the sheet-shaped food product more fragile. Thus, the crispiness of the sheet-shaped food product is improved. The upper limit of the thickness of the seaweed flakes is preferably 150 µm or less, and more preferably 100 µm or less, from the viewpoint of improving the crispiness. Meanwhile, the lower limit is preferably 5 µm or more from the viewpoint of the shape retention property. The thickness of the seaweed flakes can be adjusted by the conditions of slicing and rolling. Specifically, the thickness of the seaweed flakes included in the sheet-shaped food product can be calculated by measuring the thickness of 20 seaweed flakes randomly selected from the raw food material before sheet forming (after the pre-treatment process) using a micro gauge or the like, and determining an average value of these values. The thickness of the seaweed flakes is preferably 5 µm or more and 200 µm or less, more preferably 5 µm or more and 150 µm or less, and still more preferably 5 µm or more and 100 µm or less.

Examples of the seasoning included in the raw food material include salt, sugar, glucose, soy sauce, sweet sake, brewed vinegar, miso paste, stock (kelp, skipjack, shiitake mushroom), extract of fishes and shellfishes, citric acid, malic acid, and sodium glutamate.

Too much seasoning in the raw food material makes it difficult to feel the material texture of the seaweed (original properties and flavor of the seaweed). Therefore, the mass ratio (WA₂/WA₁) of the dry mass (WA₂) of the seasoning to the dry mass (WA₁) of the seaweed flakes in the raw food material is preferably 1.0 or less, and more preferably 0.9 or less.

The mass ratio (WA/WT) of the dry mass (WA) of the raw food material to a total dry mass (WT) of the sheet-shaped food product is 85% or more. By using seaweed flakes as the raw food material and the ratio of the dry mass of the raw food material being 85% or more, a sheet-shaped food product with excellent material texture of the seaweed (original properties and flavor of the seaweed) can be obtained. The ratio (WA/WT) of the dry mass of the raw food material is more preferably 88% or more from the viewpoint of more improving the material texture of the seaweed (original properties and flavor of the seaweed). From the viewpoint of blending a binding agent enough to impart shape retention property to the sheet-shaped food product, the ratio of the dry mass of the raw food material is preferably 94% or less. Here, the term "shape retention property" means performance to maintain the structure as the sheet-shaped food product. The mass ratio (WA/WT) is preferably 85% or more and 94% or less, and more preferably 88% or more and 94% or less.

### (Binding Agent)

The binding agent is used to enhance the shape retention property of the sheet-shaped food product. The binding agent is not particularly limited. For example, the binding agent containing polysaccharides is used. Examples of the binding agent containing polysaccharides include konjac (for example, konjac powder, manufactured by Shimizu Chemical Corporation), pectin (for example, PECTIN HR-450, manufactured by Organo Food Tech Corporation), tamarind gum (for example, GLYROID 3S, manufactured by Sumitomo Dainippon Pharma Co., Ltd.), agar, carrageenan, alginic acid, guar gum, xanthan gum and the like. These binding agents can be used alone or in combination of two or more thereof.

Disclosed herein, but not within the scope of the claims, the mass ratio (WA/WB) of the dry mass of the raw food material (WA) to the dry mass (WB) of the binding agent is 6.1 or more and 13.9 or less. If the mass ratio (WA/WB) exceeds 13.9, the binding agent is insufficient so that it becomes difficult to secure the shape retention property as the sheet-shaped food product. If the shape retention property is insufficient, it is difficult to retain the structure having voids on the overlapping surface of the sheet. As a result, sufficient crispness cannot be obtained. Small mass ratio (WA/WB) means high content of the binding agent in the sheet-shaped food product. In the case of high content of the binding agent in the sheet-shaped food product, the swollen binding agent forms a gel-shaped network structure when the binding agent is mixed. As a result, the mass of the raw food material included per predetermined volume in the sheet-shaped food product decreases. In this case, the gel-shaped binding agent undergoes drying and shrinkage in the subsequent molding process. This results in formation of a soft sheet-shaped food product with many gaps in the surface layer. If the mass ratio (WA/WB) is less than 6.1, the crispiness of the sheet-shaped food product significantly deteriorates due to its softness.

The upper limit of the mass ratio (WA/WB) is 13.5 or less, and more preferably 11.0 or less, from the viewpoint of the shape retention property as the sheet-shaped food product. The lower limit of the mass ratio (WA/WB) is 7.4 or more, and more preferably 9.0 or more, from the viewpoint of improving the crispness. The mass ratio (WA/WB) is 7.4 or more and 13.5 or less, and more preferably 9.0 or more and 11.0 or less.

The dry mass is the mass in which the moisture content of the object to be measured is removed from the mass of the raw food material or binding agent included in the sheet-shaped food product (total mass of the object to be measured). The moisture content of the object to be measured is measured by the method mentioned in Analytical Manual of The Standard Tables of Food Composition in Japan -2015- (7th Revision). Specifically, the moisture content of the object to be measured can be measured using Heat Drying Type Moisture Meter MX-50 (manufactured by A&D Company, Limited).

### (Moisture Content)

The moisture content in the sheet-shaped food product is 6.0% by mass or less. If the moisture content exceeds 6.0% by mass, the sheet-shaped food product is excessively soft and the crispness deteriorates. From the viewpoint of improving the crispness, the moisture content of the sheet-shaped food product is preferably 4.5% by mass or less. From the viewpoint of the shape retention property of the sheet-shaped food product, the moisture content of the sheet-shaped food product is preferably 1.0% by mass or more. The moisture content of the sheet-shaped food product is preferably 1.0% by mass or more and 6.0% by mass or less, and more preferably 1.0% by mass or more and 4.5% by mass or less.

The moisture content of the sheet-shaped food product can be by the measurement method according to the atmospheric heating drying method mentioned in Analytical Manual of The Standard Tables of Food Composition in Japan -2015- (7th Revision). Specifically, using Heat Drying Type Moisture Meter MX-50 (manufactured by A&D Company, Limited) and 5 g of a sample of the sheet-shaped food product, the moisture content of the sheet-shaped food product can be measured.

### (Other Components)

The sheet-shaped food product can include components other than the above-mentioned raw food material and binding agent. Other components are not particularly limited. Examples of other components include oils, dietary fibers and the like. The use of a moisture retention agent is not preferable since the crispness deteriorates and the material texture of the seaweed deteriorates.

### <Structure of Sheet-Shaped Food Product>

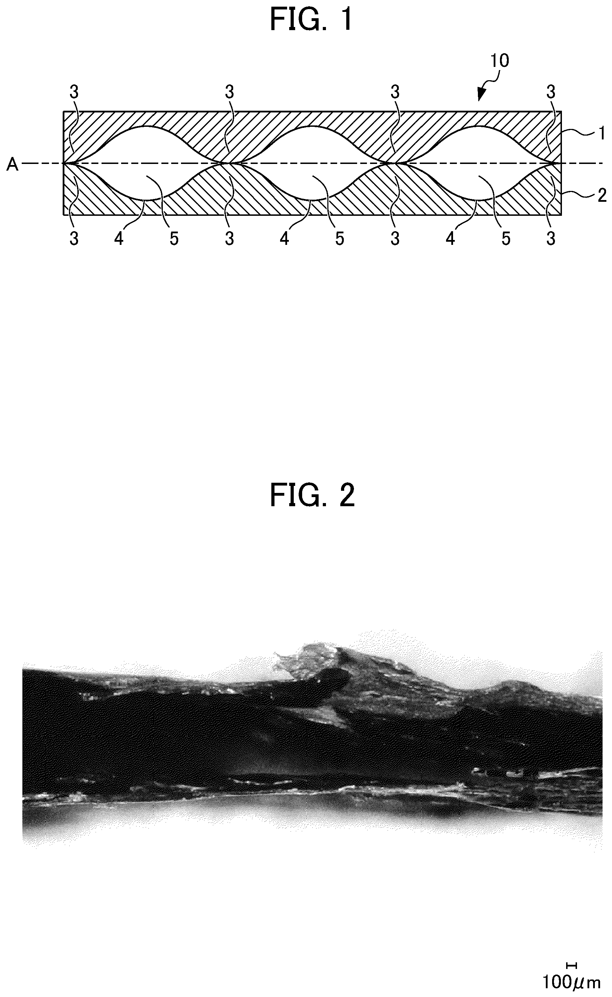

The sheet-shaped food product has an integral laminate structure in which two sheets are overlapped with each other. Each of the two sheets is produced by forming a mixed material including a raw food material and a binding agent into a sheet. Both the two sheets have irregularities on an overlapping surface. In the sheet-shaped food product, voids are formed between the overlapping surfaces of two sheets correspondingly to each irregular shape. As shown in the schematic cross-sectional view of the sheet-shaped food product of FIG. 1, a sheet-shaped food product 10 has an integral laminate structure in which two sheets (first layer 1, second layer 2) are overlapped with each other. Both two sheets (the first layer 1, the second layer 2) have irregularities (protrusions 3, recesses 4) on the overlapping surface. As shown in FIG. 1, when the surface having irregularities of the first layer 1 and the surface having irregularities of the second layer 2 are overlapped with each other, voids 5 are formed between the overlapping surfaces correspondingly to each irregular shape. The "voids 5" formed between the overlapping surfaces of two sheets include not only large voids 5 formed by connecting the first and second layers with protrusion vertices, but also voids 5 which are formed correspondingly to its overlapping structure by connecting the first and second layers to the protrusion 3 at the recess 4, or to the recess 3 at the middle of the protrusion 3 and the recess 4.

By forming voids between the overlapping surfaces of the sheet-shaped food products correspondingly to each irregular shape, the volume of the sheet-shaped food product is made larger, thus making it possible to obtain sufficient crispness.

The thickness of the sheet-shaped food product is preferably 200 µm or more and 1,500 µm or less, and more preferably 400 µm or more and 1,200 µm or less, from the viewpoint of the volume capable of getting sufficient satisfaction when eating.

The ratio of voids to the total thickness in the cross-section of the sheet-shaped food product is preferably 30% or more, and more preferably 40% or more, from the viewpoint of an improvement in crispiness. From the viewpoint of the shape retention property, the ratio of voids to the total thickness is preferably 70% or less. When the flake-shaped food product is produced, the ratio of voids to the total thickness of the sheet-shaped food product is preferably 30% or more since the rate of increase in apparent thickness dimension increases when the below-mentioned drying shrinkage is performed. The ratio of voids to the total thickness is determined as follows. First, the width in the thickness direction of voids at five positions in total in a plurality of cross-sections of the sheet-shaped food product is measured by a micro gauge, and then the ratio of voids to the total thickness at each measurement position is calculated. The average value of five calculated ratios is the ratio of voids to the total thickness. The ratio of voids to the total thickness of the sheet-shaped food product is preferably 30% or more and 70% or less, and more preferably 40% or more and 70% or less.

### [Flake-Shaped Food Product]

It is preferable that the flake-shaped food product is formed by cutting the sheet-shaped food product into a plurality of flakes. The flake-shaped food product is excellent in handleability when eating. The size of the flake-shaped food product is not particularly limited. The sheet-shaped food product is preferably cut into rectangular flakes having a length of about 10 mm to 30 mm per side. The flake-shaped food product is particularly suitable as food products such as snacks.

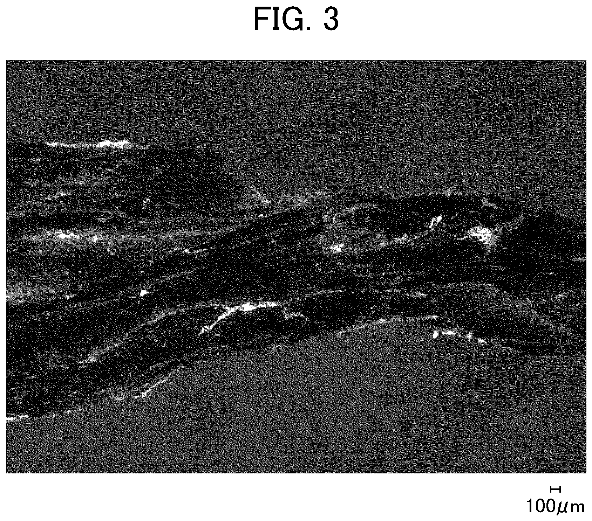

The flake-shaped food product is preferably formed by adding water to a plurality of cut flakes, followed by drying shrinkage of the water-containing flakes. By this method, it is possible to obtain a flake-shaped food product having a shape with increased apparent thickness dimension compared to the sheet-shaped food product. The moisture content of the cut flakes is not particularly limited as long as a flake-shaped food product having the desired shape is obtained. The moisture content of the flakes is adjusted, for example, to 18% by mass to 22% by mass. After adjusting the moisture content, the water-containing flakes are rapidly dried, thus causing shrinkage and deformation of the flakes due to moisture migration. As a result, the flakes thus obtained have a shape in which voids is increased and an apparent thickness is increased, especially in the interior of the sheet as the surface layer, as shown in the photograph of the flake-shaped food product in FIG. 3. The drying temperature is not particularly limited as long as flake-shaped food product having the desired shape can be produced. The drying temperature is preferably 80°C to 100°C. The drying temperature is more preferably 85°C to 95°C from the viewpoint of enhancing the amount of increase in voids. As a result, it is possible to obtain a sheet-shaped food product which has sufficiently high volume and particularly excellent crispiness. The apparent thickness dimension of the flake-shaped food product is preferably 1.2 times or more, and more preferably 1.5 times or more, larger than the thickness of the sheet-shaped food product from the viewpoint of further increasing the volume of the flake-shaped food product and further improving the crispiness.

### [Method for Producing Sheet-Shaped Food Product]

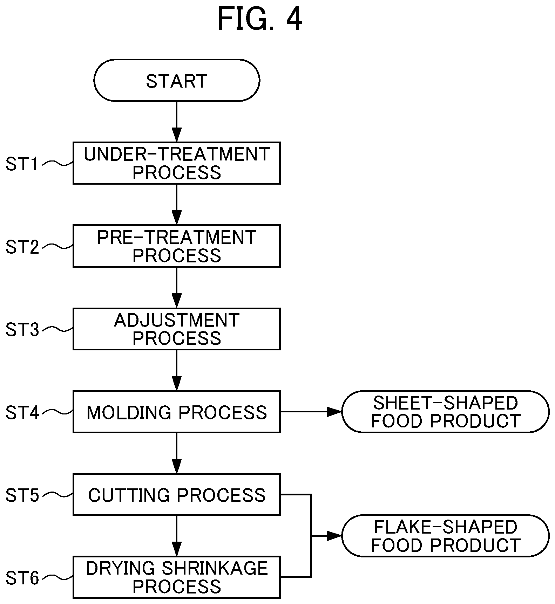

The method for producing a sheet-shaped food product will be described by using FIG. 4. FIG. 4 is a flowchart illustrating one example of the process for producing a sheet-shaped food product. As illustrated in FIG. 4, the process for producing a sheet-shaped food product includes, for example, an under-treatment process ST1, a pre-treatment process ST2, an adjustment process ST3, and a molding process ST4. Furthermore, although it may depend on the type, the freshness or the like of the raw food material, there may be also a case in which the under-treatment process ST1 and the pre-treatment process ST2 are omitted, and the raw food material is directly processed (adjusted, or molded). Hereinafter, the method for producing a sheet-shaped food product will be described, taking the case of using a typical seaweed wakame as an example.

### <Under-Treatment Process>

The under-treatment process ST1 is a process which is specific to each food material, and varies depending on the type of seaweed. When the seaweed is wakame, the under-treatment process ST1 includes, for example, (1) cutting salted wakame, (2) washing the wakame, (3) dehydrating the wakame, (4) drying the wakame, and (5) sorting out the wakame.

### <Pre-Treatment Process>

When the seaweed is dried wakame, the pre-treatment process ST2 includes, for example, (1) crushing wakame into small pieces (for example, square with sides of 1 mm to 2 mm), (2) classifying the dried wakame using a sieve with a mesh size of 3 mm, (3) allowing the dried wakame to swell by adding water, and (4) rolling (or slicing) the swollen wakame. By the under-treatment process ST1 and the pre-treatment process ST2, the dried wakame is processed into flakes which can pass through a sieve with a mesh size of 1.5 mm to 3 mm.

The food material is processed into appropriate size or shape by the above under-treatment process ST1 and pre-treatment process ST2, thus making it possible to produce a sheet-shaped food product 1 with more improved crispness.

### <Adjustment Process>

The adjustment process ST3 is basically a treatment process which is common irrespective of the type of seaweed. In the adjustment process ST3, the binding agent is added to the flake-shaped raw food material. The binding agent is added to the raw food material such that the mass ratio (WA/WB) of the dry mass (WA) of the raw food material to the dry mass of the binding agent (WB) is 6.1 or more and 13.9 or less, followed by mixing of the raw food material and the binding agent.

### <Molding Process>

The molding process ST4 is basically a treatment process that is common irrespective of the type of seaweed. For each food material, for example, the below-mentioned heating temperature and rotation speed of a drum may be different. In the molding process ST4, it is possible to obtain a sheet-shaped food product with a moisture content of 6.0% by mass or less by adjusting the drying time on the drum as appropriate.

In the molding process ST4, the raw food material including the binding agent added thereto are first placed in a drum heated to, for example, 110°C or higher. The drum is rotated to form a first layer whose one side is dried. At this stage, the side opposite to a dried side of the first layer is not completely dried and is in a state of having irregularities due to the seaweed flakes included therein. Similarly, a second layer whose one side is dried is formed. At this stage, the side opposite to the dried side of the second layer is not completely dried and is in a state of having irregularities due to the seaweed flakes included.

Subsequently, the surface having irregularities of the first layer 1 and the surface having irregularities of the second layer 2 are overlapped with each other. As a result, as shown in FIG. 1, voids 5 are formed between the overlapping surfaces correspondingly to each irregular shape (protrusions 3, recesses 4). The laminated sheet-shaped food product is dried by further heating or residual heat of the surface layer, and thus the size of the voids 5 becomes larger. The term "voids" as used herein includes not only large layered voids formed between overlapping surfaces by connecting a small number of irregularities, but also voids formed between irregularities between overlapping surfaces by connecting a large number of irregularities.

These processes make it possible to produce a sheet-shaped food product having an integral laminate structure in which two sheets formed from a mixed material including a raw food material and a binding agent are overlapped with each other. Both two sheets have irregularities on an overlapping surface. In the sheet-shaped food product, voids are formed between the overlapping surfaces of two sheets correspondingly to each irregular shape of two sheets. The sheet-shaped food product may also be produced by the method other than the above-mentioned production method. By using, for example, a plurality of drums, it is also possible to integrally form a sheet-shaped food product having an integral laminate structure with voids formed by overlapping two sheets.

### [Method for Producing Flake-Shaped Food Product]

It is possible to produce a flake-shaped food product by further cutting the sheet-shaped food product produced by the above-mentioned method for producing a sheet-shaped food product in the cutting process ST5. The flake-shaped food product is easier to handle when eating. It is possible to obtain a flake-shaped food product having a shape in which an apparent thickness dimension is increased compared to the sheet-shaped food product, by further performing the drying shrinkage process ST6.

### <Cutting Process>

It is possible to obtain a flake-shaped food product by performing the cutting process ST5 in which the sheet-shaped food product is cut into a plurality of flakes each having a predetermined size. The cutting method and cutting conditions are not particularly limited. From the viewpoint of ease of eating, it is preferable to cut the sheet-shaped food product into rectangular flakes having a length of about 10 mm to 30 mm per side.

### <Drying Shrinkage Process>

By the drying shrinkage process ST6, the apparent thickness dimension of the flake-shaped food product cut into flakes increases, thus making it possible to further enhance the crispiness.

In the drying shrinkage process ST6, the flake-shaped food product cut in the cutting process ST5 first is made to contain a certain amount of water. There is no particular limitation on the method in which the flake-shaped food product is made to contain water. Examples of the preferred method include a method of spraying the flake-shaped food product with water. There is no particular limitation on the moisture content of the water-containing flake-shaped food product. The moisture content of the flake-shaped food product is adjusted to, for example, 18% by mass to 22% by mass. After adjusting the moisture content, the water-containing flake-shaped food product is dried until the moisture content becomes 6.0% by mass or less. The drying method is not particularly limited. The water-containing flake-shaped food product is preferably dried by heating, and particularly dried by hot air. Examples of the drying device for drying by hot air include a shelf type hot air dryer, a hot air type airflow dryer, and a fluidized bed dryer. Of these, a shelf type hot air dryer is preferable since the flake-shaped food product is less fragile. From the viewpoint of enhancing the amount of increase in voids, the drying temperature is preferably 80°C to 100°C, and more preferably 85°C to 95°C. In the drying shrinkage process ST6, drying shrinkage and deformation due to rapid moisture migration in the seaweed flakes constituting the sheet-shaped food product. As a result, the flake-shaped food product thus obtained has a shape in which voids is increased and an apparent thickness is increased, especially in the interior of the sheet as the surface layer, as shown in the photograph in FIG. 3. The crispiness of the flake-shaped food product is further improved when the flake-shaped food has such a shape.

If the drying shrinkage process is intended to be performed from the beginning, a sheet-shaped food product with high moisture content of about 18% by mass to 22% by mass may be produced in the molding process, followed by cutting the sheet-shaped food product with high moisture content into flakes and further hot air drying of the sheet-shaped food product without adjusting the moisture content.

### <Seasoning Process>

The sheet-shaped food product produced in the molding process ST4 or the flake-shaped food product after the cutting process ST5 or the drying shrinkage process ST6 may be further seasoned in the seasoning process. In the seasoning process, it is possible to use a seasoning liquid and/or a powder seasoning. In the seasoning process, for example, the sheet-shaped food product or flake-shaped food product can be seasoned by the method of placing the sheet-shaped food product or flake-shaped food product in a rotary mixer and spraying a seasoning liquid while rotating the mixer to coat the surface of the sheet-shaped food product or flake-shaped food product with the seasoning liquid, or the method of adhering a powder seasoning to the sheet-shaped food product.

### EXAMPLES

Hereinafter, the present invention will be described by way of Examples and Comparative Examples. The present invention is not limited to these Examples.

### 1. Experiment 1: Production and Evaluation of Sheet-Shaped Food Product

Sheet-shaped food products of Examples 1 to 5 and Comparative Examples 1 to 6 were produced by the following procedure and then evaluated. The moisture content is indicated by the value measured by Heat Drying Type Moisture Meter MX-50 (manufactured by A&D Company, Limited) using samples of the sheet-shaped food products thus produced.

### (Examples 1 to 4)

In Examples 1 to 4, dried wakame produced using wakame subjected to an under-treatment in the same manner as in the above production method was used as the raw material. Subsequently, by using the same method as in the pre-treatment process, the dried wakame was crushed and then the crushed dried wakame was classified by passing through a sieve with a mesh size of 3 mm. The classified dried wakame was desalted and then allowed to swell. Swelling was performed by soaking 100 g of the classified dried wakame in 2,000 g of water (20 times the weight of the dried wakame) for 5 minutes. After soaking for 5 minutes, the drained wakame was rolled to obtain seaweed flakes shown in Table 1. The seaweed flakes thus obtained were used in the adjustment process.

Subsequently, the rolled wakame (seaweed flakes) was used as the raw food material in the adjustment process to produce a sheet-shaped food product. Specifically, a binding agent was added to the seaweed flakes so that the mass ratio (WA/WB) of the dry mass became the mass ratio shown in Table 1, followed by mixing the binding agent and the seaweed flakes. Thereafter, the molding process was performed in the same manner as in the above production method, and the mixture of the binding agent and the seaweed flakes was formed into sheets to produce sheet-shaped food products of Examples 1 to 4.

### (Comparative Examples 1 to 3)

Using the materials shown in Table 1, sheet-shaped food products of Comparative Examples 1 to 3 shown in Table 1 were produced by the same production method as in Examples 1 to 4.

### (Example 5 and Comparative Example 4)

A sheet-shaped food product of Example 5 was produced by the same production method as in Examples 1 to 4, except that 5% by mass of powdered oil was used based on the total dry mass of the sheet-shaped food product in Example 5. A sheet-shaped food product of Comparative Example 4 was produced by the same production method as in Examples 1 to 4, except that 8% by mass of powdered oil was used based on the total dry mass of the sheet-shaped food product in Comparative Example 4.

### (Comparative Example 5)

Using the materials shown in Table 1, a single-layered sheet-shaped food product of Comparative Example 5 was produced by the same production method as in Examples 1 to 4, except for the molding process. In Comparative Example 5, both sides of one sheet were dried without laminating two sheets in the molding process.

### (Comparative Example 6)

A commercially available toasted wakame product (8 mm long, 12 mm wide, and 1,000 µm thick) was prepared as the sheet-shaped food product of Comparative Example 6. The sheet-shaped food product of Comparative Example 6 was evaluated in the same manner as in the sheet-shaped food products of other Examples and Comparative Examples.

### <Evaluation Method>

The sheet-shaped food products of Examples 1 to 5 and Comparative Examples 1 to 6 were evaluated by the following method. The evaluation results are shown in Table 1.

### [1] Evaluation of Crispness

The sheet-shaped food products of Examples and Comparative Examples were used as samples for evaluation of the crispness. The crispness felt by ten monitors when eating samples was evaluated according to the following evaluation criteria. The average value of the evaluation results of ten monitors, rounded to the first decimal place, is shown in Table 1 as the evaluation results of the sheet-shaped food product. If the value of the evaluation result of the crispiness is 3 or more, the crispiness of the sheet-shaped food product is favorable.

### (Evaluation Criteria)

5: Particularly favorable crispness is recognized.
4: Favorable crispness is recognized.
3: Sufficient crispness is recognized.
2: Poor crispness is recognized.
1: No crispness is recognized.

### [2] Evaluation of Material Texture of Seaweed (Original Properties and Flavor of Seaweed)

The sheet-shaped food products of Examples and Comparative Examples were used as samples for evaluation of the material texture of the seaweed. The material texture of the seaweed (original properties and flavor of the seaweed) felt by ten monitors when eating samples was evaluated according to the following evaluation criteria. The average value of the evaluation results of ten monitors, rounded to the first decimal place, is shown in Table 1 as the evaluation results of the material texture of the seaweed. If the value of the evaluation result of the material texture of the seaweed is 3 or more, sufficient material texture of the seaweed is recognized.

### (Evaluation Criteria)

5: Particularly favorable original properties and flavor of the seaweed are recognized.
4: Favorable original properties and flavor of the seaweed are recognized.
3: Sufficient original properties and flavor of the seaweed are recognized.
2: Poor original properties and flavor of the seaweed are recognized.
1: Neither original properties nor flavor of the seaweed are recognized.

### [3] Evaluation of Presence of Absence of Laminate Structure

The sheet-shaped food products of Examples and Comparative Examples were used as samples for evaluation of the presence or absence of the laminate structure. The presence or absence of the integral laminate structure (laminate structure) in which two sheets are overlapped with each other was evaluated by observing the cross-section of each sample by an optical microscope. If the sheet-shaped food product has the laminate structure, it was evaluated as "yes". If the sheet-shaped food product has no laminate structure, it was evaluated as "no".

**[Table 1]**

| | Type of Food materials | Shape of seaweed flakes | | Composition of sheet-shaped food product | | | Evaluation of sheet-shaped food product | | | Overall thickness (µm) |
|---|---|---|---|---|---|---|---|---|---|---|
| | | Maximum length (mm) | Thickness (µm) | WA/ WB | Ratio of raw food material (%) | Moisture content (% by mass) | Crispness | Material texture of seaweed | Presence or absence of laminate structure | |
| Ex. 1 | Wakame | 1.5 | 100 | 10. 0 | 91 | 4.0 | 5 | 5 | Yes | 800 |
| Ex. 2 | Wakame | 1.5 | 100 | 8.2 | 89 | 4.0 | 4 | 5 | Yes | 800 |
| Ex. 3 | Wakame | 1.5 | 100 | 12.5 | 93 | 4.0 | 4 | 5 | Yes | 800 |
| Ex. 4 | Wakame | 1.5 | 100 | 10. 0 | 91 | 6.0 | 4 | 5 | Yes | 800 |
| Ex. 5 | Wakame | 1.5 | 100 | 10. 0 | 86 | 4.0 | 5 | 4 | Yes | 800 |
| Comp. Ex. 1 | Wakame | 1.5 | 100 | 6.0 | 86 | 4.0 | 2 | 3 | Yes | 800 |
| Comp. Ex. 2 | Wakame | 1.5 | 100 | 14.0 | 93 | 4.0 | 2 | 5 | Yes | 800 |
| Comp. Ex. 3 | Wakame | 1.5 | 100 | 10.0 | 91 | 8.0 | 2 | 5 | Yes | 800 |
| Comp. Ex. 4 | Wakame | 1.5 | 100 | 10.0 | 84 | 4.0 | 4 | 2 | Yes | 800 |
| Comp. Ex . 5 | Wakame | 1.5 | 100 | 10.0 | 91 | 4.0 | 2 | 5 | No | 300 |
| Comp. Ex. 6 | Wakame | - | - | - | 100 | 4.0 | 1 | 5 | No | 1000 |

As shown in Table 1, in Examples 1 to 5 in which WA/WB is 7.4 or more and 13.5 or less, the ratio of the raw food material is 85% or more, the moisture content is 6.0% by mass or less, and sheet-shaped food products have a laminated structure, sheet-shaped food products with both favorable material texture of the seaweed and crispness were obtained.

Meanwhile, in Comparative Example 1 in which WA/WB is less than 7.4, a sheet-shaped food product with poor crispiness was obtained. In Comparative Example 2 in which WA/WB exceeds 13.5, a sheet-shaped food product with poor crispiness was obtained. The sheet-shaped food of Comparative Example 2 was fragile during handling in the evaluation and exhibited poor shape retention property. In Comparative Example 3 in which the moisture content is 8.0% by mass, a sheet-shaped food product with poor crispiness was obtained. In Comparative Example 4 in which the ratio of the raw food material is 84%, a sheet-shaped food product with poor material texture of the seaweed was obtained.

The single-layered toasted wakames of Comparative Examples 5 and 6 had significantly poor crispiness. In particular, the toasted wakame of Comparative Example 6 was hard when eating.

### 2. Experiment 2: Evaluation for Influence of Shape of Seaweed Flakes

Using the seaweed flakes shown in Table 2 as the raw material, sheet-shaped food products of Examples 6 to 11 were produced by the same production method as in Examples 1 to 4 of Experiment 1. The shape of the seaweed flakes and the composition of the sheet-shaped food product are shown in Table 2. The sheet-shaped food products thus obtained were evaluated in the same manner as in Examples 1 to 4. The evaluation results are shown in Table 2.

**[Table 2]**

| | Type of Food materials | Shape of seaweed flakes | | Composition of sheet-shaped food product | | | Evaluation of sheet-shaped food product | | | Overall thickness (µm) |
|---|---|---|---|---|---|---|---|---|---|---|
| | | Maximum length (mm) | Thickness (µm) | WA/ WB | Ratio of raw food material (%) | Moisture content (% by mass) | Crispness | Material texture of seaweed | Presence or absence of laminate structure | |
| Ex. 6 | Wakame | 1.5 | 50 | 10.0 | 91 | 4.0 | 5 | 5 | Yes | 800 |
| Ex. 7 | Wakame | 1.5 | 200 | 10.0 | 91 | 4.0 | 4 | 5 | Yes | 800 |
| Ex. 8 | Wakame | 1.5 | 300 | 10.0 | 91 | 4.0 | 3 | 5 | Yes | 800 |
| Ex. 9 | Wakame | 2.0 | 100 | 10.0 | 91 | 4.0 | 5 | 5 | Yes | 800 |
| Ex. 10 | Wakame | 1.0 | 100 | 10.0 | 91 | 4.0 | 4 | 5 | Yes | 800 |
| Ex. 11 | Wakame | 0.5 | 100 | 10.0 | 91 | 4.0 | 3 | 5 | Yes | 800 |

As is apparent from Tables 1 and 2, the crispiness is more improved when the maximum length of the seaweed flakes is 1.0 mm or more. The crispiness of the seaweed flakes is also improved when the thickness of the flakes is 200 µm or less.

### 3. Experiment 3: Evaluation of Flake-Shaped Food Product

Using the sheet-shaped food product of Example 2 produced in Experiment 1, flake-shaped food products of Examples 12 to 16 were produced. The resulting flake-shaped food products of Examples 12 to 16 were evaluated in the same manner as in Examples 1 to 4. The apparent thickness dimension of the flake-shaped food product is the average value of thicknesses measured at five positions using a micro gauge. The evaluation results are shown in Table 3.

### (Example 12)

The sheet-shaped food product of Example 2 was cut into flakes each having a size of 15 mm × 20 mm to produce a flake-shaped food product of Example 12.

### (Examples 13 to 16)

The sheet-shaped food product of Example 2 was cut into flakes each having a size of 15 mm × 20 mm. The resulting flake-shaped sheet food product was sprayed with water to adjust the moisture content to 20% by mass. Thereafter, hot air drying was performed under the conditions shown in Table 3 to cause drying shrinkage of the water-containing sheet-shaped food products, thus producing flake-shaped food products with final moisture content of 4.0% by mass of Examples 13 to 16.

**[Table 3]**

| | Type of Food materials | Hot air drying conditions (° C) | Evaluation of flake-shaped food product | | | Apparent thickness dimension of flake-shaped food product (µm) |
|---|---|---|---|---|---|---|
| | | | Crispness | Material texture of seaweed | Presence or absence of laminate structure | |
| Ex. 12 | Wakame | - | 4 | 5 | Yes | 800 |
| Ex. 13 | Wakame | 85 | 5 | 5 | Yes | 1400 |
| Ex. 14 | Wakame | 95 | 5 | 5 | Yes | 1600 |
| Ex. 15 | Wakame | 80 | 4 | 5 | Yes | 1000 |
| Ex. 16 | Wakame | 100 | 4 | 5 | Yes | 900 |

As shown in Table 3, in the flake-shaped food products of Examples 13 to 16, which were obtained by hot air drying of the flake-shaped food products with a moisture content of 20% by mass, the apparent thickness dimension was increased and the crispness was also improved compared to the flake-shaped food product of Example 12 which has the same thickness as that of the sheet-shaped food product. In particular, regarding Examples 13 and 14 in which hot air drying was performed at 85°C to 95°C, the apparent thickness dimension increased 1.5 times or more the thickness dimension of the sheet-shaped food product.

### 4. Experiment 4: Evaluation of Sheet made of Other Food Materials (Kelp)

A sheet-shaped food product was obtained using flake-shaped kelp as the food material. Specifically, using the seaweed flakes shown in Table 4 as the raw material, sheet-shaped food products of Examples 17 to 20 were produced by the same production method as in Examples 1 to 4 of Experiment 1. The shape of the seaweed flakes and the composition of the sheet-shaped food products are shown in Table 4. The resulting sheet-shaped food products were evaluated in the same manner as in Examples 1 to 4. The evaluation results are shown in Table 4.

**[Table 4]**

| | Type of Food materials | Shape of seaweed flakes | | Composition of sheet-shaped food product | | | Evaluation of sheet-shaped food product | | | Overall thickness (µm) |
|---|---|---|---|---|---|---|---|---|---|---|
| | | Maximum length (mm) | Thickness (µm) | WA/ WB | Ratio of raw food material (%) | Moisture content (% by mass) | Crispness | Material texture of seaweed | Presence or absence of laminate structure | |
| Ex. 17 | Kelp | 1.5 | 100 | 10.0 | 91 | 4.0 | 5 | 5 | Yes | 800 |
| Ex. 18 | Kelp | 1.5 | 100 | 8.2 | 89 | 4.0 | 4 | 5 | Yes | 800 |
| Ex. 19 | Kelp | 1.5 | 100 | 12.5 | 93 | 4.0 | 4 | 5 | Yes | 800 |
| Ex. 20 | Kelp | 1.5 | 100 | 10.0 | 91 | 6.0 | 4 | 5 | Yes | 800 |

As shown in Table 4, in Examples 17 to 20 in which kelp is used as the food material, WA/WB is 7.4 or more and 13.5 or less, the ratio of the raw food material is 85% or more, the moisture content is 6.0% by mass or less, and the sheet-shaped food product has a laminate structure, sheet-shaped food products having sufficiently excellent material texture of the seaweed and favorable crispness were obtained.

### EXPLANATION OF REFERENCE NUMERALS

- 1:: FIRST LAYER
- 2:: SECOND LAYER
- 3:: PROTRUSIONS
- 4:: RECESSES
- 5:: VOIDS
- 10:: SHEET-SHAPED FOOD PRODUCT
- A:: OVERLAPPING SURFACE

## Claims

1. A sheet-shaped food product which comprises a raw food material and a binding agent, and does not comprise a moisture retention agent, wherein
the raw food material is a seaweed formed into a plurality of flakes by cutting,
the sheet-shaped food product has a laminate structure in which two sheets each including the raw food material and the binding agent are overlapped with each other and integrally formed,
both the two sheets have irregularities on an overlapping surface,
in the sheet-shaped food product, voids are formed between the overlapping surfaces of the two sheets correspondingly to each irregular shape,
a mass ratio (WA/WT) of a dry mass (WA) of the raw food material to a total dry mass (WT) of the sheet-shaped food product is 85% or more,
a mass ratio (WA/WB) of the dry mass (WA) of the raw food material to a dry mass (WB) of the binding agent is 7.4 or more and 13.5 or less, and
a moisture content of the sheet-shaped food product is 6.0% by mass or less,
wherein the moisture content of the sheet-shaped food product is measured by a measurement method according to the atmospheric heating drying method mentioned in Analytical Manual of The Standard Tables of Food Composition in Japan - 2015- (7th Revision), and the moisture content of the sheet-shaped food produce is measured using 5 g of a sample of the sheet-shaped food product.

2. The sheet-shaped food product according to claim 1, wherein the mass ratio (WA/WB) of the dry mass (WA) of the raw food material to the dry mass (WB) of the binding agent is 9.0 or more and 11.0 or less.

3. The sheet-shaped food product according to claim 1, wherein a maximum length dimension of the flake of the raw food material is 1.0 mm or more.

4. The sheet-shaped food product according to claim 1, wherein a thickness dimension of the flake of the raw food material is 200 µm or less.

5. A flake-shaped food product which is formed by cutting the sheet-shaped food product according to any one of claims 1 to 4 into a plurality of flakes.

6. A method for producing the flake-shaped food product according to claim 5, comprising a process of:
forming the flake-shaped food product having a shape with an apparent thickness dimension increased compared to the sheet-shaped food product by drying shrinkage after adding water to the plurality of cut flakes.

## Patentansprüche

1. Blattförmiges Nahrungsmittelprodukt, das ein rohes Nahrungsmittelmaterial und ein Bindemittel umfasst und kein Feuchtigkeitsretentionsmittel umfasst, wobei
das rohe Nahrungsmittelmaterial ein Seetang ist, der zu einer Vielzahl von Flocken durch Schneiden gebildet ist,
das blattförmige Nahrungsmittelprodukt eine Laminatstruktur aufweist, bei der zwei Blätter, die jeweils das rohe Nahrungsmittelmaterial und das Bindemittel beinhalten, miteinander überlappt und einstückig gebildet sind,
beide der zwei Blätter Unregelmäßigkeiten auf einer überlappenden Fläche aufweisen,
in dem blattförmigen Nahrungsmittelprodukt Hohlräume zwischen den überlappenden Flächen der zwei Blätter entsprechend jeder unregelmäßigen Form gebildet sind,
ein Massenverhältnis (WA/WT) einer Trockenmasse (WA) des rohen Nahrungsmittelmaterials zu einer Gesamttrockenmasse (WT) des blattförmigen Nahrungsmittelprodukts 85 % oder mehr ist,
ein Massenverhältnis (WA/WB) der Trockenmasse (WA) des rohen Nahrungsmittelmaterials zu einer Trockenmasse (WB) des Bindemittels 7,4 oder mehr und 13,5 oder weniger ist und
ein Feuchtigkeitsgehalt des blattförmigen Nahrungsmittelprodukts 6,0 Masse-% oder weniger ist,
wobei der Feuchtigkeitsgehalt des blattförmigen Nahrungsmittelprodukts durch ein Messverfahren gemäß dem atmosphärischen Erwärmungstrocknungsverfahren gemessen wird, das in dem Analytischen Handbuch der Standardtabellen der Nahrungsmittelzusammensetzung in Japan - 2015 - (7. Überarbeitung) erwähnt wird, und der Feuchtigkeitsgehalt des blattförmigen Nahrungsmittelerzeugnisses unter Verwendung von 5 g einer Probe des blattförmigen Nahrungsmittelprodukts gemessen wird.

2. Blattförmiges Nahrungsmittelprodukt nach Anspruch 1, wobei das Massenverhältnis (WA/WB) der Trockenmasse (WA) des rohen Nahrungsmittelmaterials zu der Trockenmasse (WB) des Bindemittels 9,0 oder mehr und 11,0 oder weniger ist.

3. Blattförmiges Nahrungsmittelprodukt nach Anspruch 1, wobei eine maximale Längenabmessung der Flocke des rohen Nahrungsmittelmaterials 1,0 mm oder mehr ist.

4. Blattförmiges Nahrungsmittelprodukt nach Anspruch 1, wobei eine Dickenabmessung der Flocke des rohen Nahrungsmittelmaterials 200 µm oder weniger ist.

5. Flockenförmiges Nahrungsmittelprodukt, das durch Schneiden des blattförmigen Nahrungsmittelprodukts nach einem der Ansprüche 1 bis 4 zu einer Vielzahl von Flocken gebildet ist.

6. Verfahren zum Herstellen des flockenförmigen Nahrungsmittelprodukts nach Anspruch 5, umfassend einen folgenden Prozess:
Bilden des flockenförmigen Nahrungsmittelprodukts mit einer Form mit einer ersichtlichen Dickenabmessung, die verglichen mit dem blattförmigen Nahrungsmittelprodukt erhöht ist, durch Trockenschrumpfung nach Hinzufügen von Wasser zu der Vielzahl von geschnittenen Flocken.

## Revendications

1. Produit alimentaire en forme de feuille qui comprend une matière première alimentaire et un agent de liaison, et ne comprend pas d'agent de rétention d'humidité, dans lequel
la matière première alimentaire est une algue formée en une pluralité de flocons par découpe,
le produit alimentaire en forme de feuille comporte une structure stratifiée où deux feuilles comprenant chacune la matière première alimentaire et l'agent de liaison se chevauchent l'une avec l'autre et sont formées d'un seul tenant,
les deux feuilles comportent des irrégularités sur une surface de chevauchement,
dans le produit alimentaire en forme de feuille, des vides sont formés entre les surfaces de chevauchement des deux feuilles de manière correspondante à chaque forme irrégulière,
un rapport de masse (WA/WT) d'une masse sèche (WA) de la matière première alimentaire sur une masse sèche totale (WT) du produit alimentaire en forme de feuille est de 85 % ou plus,
un rapport de masse (WA/WB) de la masse sèche (WA) de la matière première alimentaire sur une masse sèche (WB) de l'agent de liaison est de 7,4 ou plus et de 13,5 ou moins, et
une teneur en humidité du produit alimentaire en forme de feuille est de 6,0 % en masse ou moins,
dans lequel la teneur en humidité du produit alimentaire en forme de feuille est mesurée par une méthode de mesure selon la méthode de séchage par chauffage atmosphérique mentionnée dans le Manuel analytique des tableaux normaux de la composition des aliments au Japon - 2015- (7e révision), et la teneur en humidité du produit alimentaire en forme de feuille est mesurée à l'aide de 5 g d'un échantillon du produit alimentaire en forme de feuille.

2. Produit alimentaire en forme de feuille selon la revendication 1, dans lequel le rapport de masse (WA/WB) de la masse sèche (WA) de la matière première alimentaire sur la masse sèche (WB) de l'agent de liaison est de 9,0 ou plus et de 11,0 ou moins.

3. Produit alimentaire en forme de feuille selon la revendication 1, dans lequel une dimension de longueur maximale du flocon de la matière première alimentaire est de 1,0 mm ou plus.

4. Produit alimentaire en forme de feuille selon la revendication 1, dans lequel une dimension d'épaisseur du flocon de la matière première alimentaire est de 200 µm ou moins.

5. Produit alimentaire en forme de flocons qui est formé par découpe du produit alimentaire en forme de feuille selon l'une quelconque des revendications 1 à 4 en une pluralité de flocons.

6. Procédé permettant la production du produit alimentaire en forme de flocons selon la revendication 5, comprenant un processus de :
formation du produit alimentaire en forme de flocons comportant une forme avec une dimension d'épaisseur apparente augmentée par rapport au produit alimentaire en forme de feuille par rétrécissement par séchage après ajout d'eau à la pluralité de flocons découpés.
